(19) Europäisches Patentamt
European Patent Office
Office européen des brevets

(11) EP 4 745 010 A1

(12) **EUROPEAN PATENT APPLICATION**
published in accordance with Art. 153(4) EPC

(43) Date of publication:
20.05.2026 Bulletin 2026/21

(21) Application number: 24856099.7

(22) Date of filing: 04.06.2024

(51) International Patent Classification (IPC):
B62D 25/08 (2006.01)     B62D 21/15 (2006.01)
B62D 65/00 (2006.01)     G06F 30/15 (2020.01)
G06F 30/20 (2020.01)     G06F 111/10 (2020.01)
G06F 119/14 (2020.01)

(52) Cooperative Patent Classification (CPC):
B62D 25/08; B60R 19/34; B62D 21/15;
B62D 21/152; B62D 29/007; B62D 65/00;
G06F 30/15; G06F 30/20; G06F 2111/10;
G06F 2119/14

(86) International application number:
PCT/JP2024/020280

(87) International publication number:
WO 2025/041404 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.08.2023 JP 2023135965

(71) Applicant: JFE Steel Corporation
Tokyo, 100-0011 (JP)

(72) Inventors:
• NAKAGAWA, Koichi
Tokyo 100-0011 (JP)
• SHIOZAKI, Tsuyoshi
Tokyo 100-0011 (JP)

(74) Representative: Hoffmann Eitle
Patent- und Rechtsanwälte PartmbB
Arabellastraße 30
81925 München (DE)

(54) **VEHICLE BODY FRONT PART STRUCTURE, METHOD FOR DESIGNING VEHICLE BODY FRONT PART STRUCTURE, AND METHOD FOR MANUFACTURING VEHICLE BODY FRONT PART STRUCTURE**

(57) A vehicle body structure 1 according to the present invention includes: a pair of left and right front side members 11 extending in a vehicle front-rear direction and having a closed cross section structure; and a crash box 21 extending from a distal end of each of the front side members 11 toward a vehicle front side and having a closed cross section structure, in which a plate thickness and a tensile strength of a metal plate used for each of the front side member 11 and the crash box 21 are set such that a ratio $F_{x1}/F_{x2}$ between an axial force $F_{x1}$ of a cross section where a line length in a cross-sectional direction is the minimum of the closed cross section structure in the crash box 21, and an axial force $F_{x2}$ of a cross section where a line length in a cross-sectional direction is the minimum of the closed cross section structure in the front side member 11, is equal to or less than a predetermined critical ratio of axial force.

FIG.1

## Description

Field

The present invention relates to a vehicle body structure including a pair of left and right front side members extending in a vehicle front-rear direction and a crash box extending from a distal end of each of the front side members toward a front side of the vehicle body, a method for designing the vehicle body structure, and a method for manufacturing the vehicle body structure. Background

In recent years, electric vehicles capable of reducing $CO_2$ emissions during vehicle travel as compared with gasoline vehicles have begun to spread as environmental measures. Although it is effective to increase a loading amount of a battery in order to increase cruising distance of an electric vehicle, this increases a weight of a vehicle body and becomes a factor of increasing collision energy at the time of collision of the vehicle. Therefore, in an electric vehicle or the like, a vehicle body structure capable of sufficiently absorbing collision energy is required. Conventionally, there is known a vehicle body structure that absorbs collision energy by compressive deformation (axial crush) of a front side member in a longitudinal direction at the time of front collision (front crash) of a vehicle. Such a front side member undergoes deformation (folding deformation) at the time of the front crash of the vehicle such that a front side thereof is compressively deformed in a vehicle front-rear direction and a rear side thereof is bent so as to protrude to a vehicle outer side in a vehicle width direction or to a lower side in a vehicle vertical direction. As a result, collision energy input to the vehicle body structure is absorbed, and deterioration of occupant protection performance (injury value of an occupant) due to a vehicle body component such as a dash panel intruding into a passenger compartment side by in-vehicle objects such as an engine and a motor is prevented.

Generally, in the compressive deformation and the deformation in the vehicle body component, the compressive deformation can absorb more collision energy even in the same stroke. For this reason, for example, Patent Literature 1 discloses a front body structure in which a front side frame (corresponding to a front side member of the present application) has a difference in rigidity between a front side and a rear side thereof, and each region has a difference in rigidity alternately in a vehicle front-rear direction. In the technique, compressive deformation starts from the front side of the front side frame having relatively low rigidity at the time of front crash of a vehicle, and then the rear side of the front side frame having relatively high rigidity is compressively deformed. As a result, the front side member can be compressively deformed into a smooth bellows-shape over the entire longitudinal direction, so that collision energy can be sufficiently absorbed.

Citation List

Patent Literature

Patent Literature 1: JP 2021-66202 A

Summary

Technical Problem

In some vehicle body structures, a crash box is provided in front of a front side member, and collision energy can be further absorbed by the crash box compressively deformed in a vehicle front-rear direction at the time of front crash of a vehicle. In such a vehicle body structure including the front side member and the crash box, a steel sheet having a relatively low strength of about 440 MPa class in a tensile strength has been used for the crash box in order to be sufficiently compressively deformed. Furthermore, a steel sheet having a relatively high strength of a tensile strength of 780 MPa class or more is often used for the front side member. In response to a demand for increasing a collision energy absorption amount at the time of front crash of an electric vehicle, use of a steel sheet (super high-tension material (ultrahigh strength steel)) having a tensile strength of 980 MPa class or more for a crash box has been studied.

In such a case, it is important that the crash box and a front side of the front side member are compressively deformed and a required absorbed amount of collision energy is obtained. However, even if the strength of the steel sheet used for the crash box is simply increased, the front side member may be deformed before sufficient compressive deformation occurs in the crash box. In such a case, there is a problem that collision energy cannot be sufficiently absorbed by the crash box, and predetermined collision performance such as a vehicle body deformation amount cannot be satisfied. Therefore, in order to increase the strength of the crash box, it is important that the front side member is deformed after the crash box is sufficiently compressively deformed. For this purpose, it is considered that plate thicknesses and material strengths of metal plates such as steel sheets used for the crash box and the front side member may be appropriately determined.

However, the technique disclosed in Patent Literature 1 sufficiently absorbs the collision energy by the front side member compressively deformed into the smooth bellows-shape over the entire longitudinal direction. Therefore, Patent Literature 1 neither discloses nor suggests determination of an appropriate plate thickness and material strength of a crash box in relation to the front side member.

In addition, an electric vehicle on which a battery is loaded is required to have a compact vehicle body structure in order to secure a battery loading space in addition to securing predetermined collision energy absorption performance. In order to make the vehicle body structure compact, it is required that collision energy can be sufficiently absorbed even with a small amount of compressive deformation of the crash box and the front side member at the time of front crash of the vehicle.

However, in the technique of Patent Literature 1, a load input at the time of the front crash of the vehicle is greatly reduced by a reduced rigidity on the front side of the front side member. Therefore, in order to secure a collision energy absorption amount due to the compressive deformation at the front crash, it is necessary to lengthen the front side member so as to increase a compressive deformation amount. Therefore, in the technique of Patent Literature 1, it is not possible to achieve both securing of collision energy absorption performance and compactness in a vehicle body structure in an electric vehicle.

The present invention has been made to solve the above problems, and an object of the present invention is to provide a vehicle body structure that can achieve compactness while satisfying predetermined collision performance at the time of front crash of a vehicle, a method for designing the vehicle body structure, and a method for manufacturing the vehicle body structure. Solution to Problem

A vehicle body structure according to the present invention includes: a pair of left and right front side members extending in a vehicle front-rear direction and having a closed cross section structure; and a crash box extending from a distal end of each of the front side members toward a vehicle front side and having a closed cross section structure. Further, a plate thickness and a tensile strength of a metal plate used for each of the front side member and the crash box are set such that a ratio $F_{x1}/F_{x2}$ between an axial force $F_{x1}$ of a cross section where a line length in a cross-sectional direction is the minimum of the closed cross section structure in the crash box, and an axial force $F_{x2}$ of a cross section where a line length in a cross-sectional direction is the minimum of the closed cross section structure in the front side member, is equal to or less than a predetermined critical ratio of axial force, thereby ensuring that the front side member is deformed after the crash box is sufficiently compressively deformed at the time of front crash of a vehicle.

According to the present invention, a method for designing a vehicle body structure including a pair of left and right front side members extending in a vehicle front-rear direction and having a closed cross section structure, and a crash box extending from a distal end of each of the front side members toward a vehicle front side and having a closed cross section structure, the method being for designing the vehicle body structure such that the front side member is deformed after the crash box is sufficiently compressively deformed at the time of front crash of a vehicle, the method including: a vehicle model acquisition step of acquiring a vehicle model having the vehicle body structure, and setting an intrusion amount evaluation part for evaluating an intrusion amount of a vehicle body component into a passenger compartment side at the time of front crash of the vehicle model; a cross-section having minimum line length in cross-sectional direction determination step of determining a cross-section where a line length in a cross-sectional direction is the minimum having the minimum line length in the cross-sectional direction for each of the crash box and the front side member in the acquired vehicle model; an axial force ratio calculation step of calculating, for each of the crash box and the front side member in the vehicle model, axial forces in the cross-section where the line length in the cross-sectional direction is the minimum when various plate thicknesses and tensile strengths are set, and calculating ratios between the axial forces calculated for the crash box and the axial forces calculated for the front side member; a vehicle body component passenger compartment side intrusion amount calculation step of performing a crashworthiness analysis regarding the front crash of the vehicle model in which the various plate thicknesses and tensile strengths are set, and calculating the intrusion amounts of the vehicle body component into the passenger compartment side at the intrusion amount evaluation part set in the vehicle model at the time of the front crash of the vehicle model; a critical ratio of axial force determination step of determining a critical ratio of axial force at which the intrusion amounts saturate to a substantially constant value from a relationship between the axial force ratios calculated by setting the various plate thicknesses and tensile strengths in the axial force ratio calculation step, and the intrusion amounts of the vehicle body component into the passenger compartment side at the intrusion amount evaluation part calculated by the crashworthiness analysis of the vehicle model in which the various plate thicknesses and tensile strengths are set in the vehicle body component passenger compartment side intrusion amount calculation step; and a plate thickness and tensile strength determination step of determining a combination of plate thicknesses and tensile strengths in which the axial force ratio is equal to or less than the critical ratio of axial force determined in the critical ratio of axial force determination step among the axial force ratios calculated for various combinations of plate thicknesses and tensile strengths.

Preferably, in the axial force ratio calculation step, weights of the crash box and the front side member in the various combinations of plate thicknesses and tensile strengths are calculated, and in the plate thickness and tensile strength determination step, a combination of plate thicknesses and tensile strengths that minimizes a total weight of the crash box and the front side member calculated in the axial force ratio calculation step is determined among combinations of plate thicknesses and tensile strengths that achieve the axial force ratios equal to or less than the critical ratio of axial force.

Preferably, in the plate thickness and tensile strength determination step, a combination of plate thicknesses and tensile strengths that maximizes the axial force calculated for the crash box is determined among combinations of plate thicknesses and tensile strengths that achieve the axial force ratios equal to or less than the critical ratio of axial force.

A method for manufacturing a vehicle body structure according to the present invention, includes: determining, by the method for designing a vehicle body structure according to the present invention, a combination of plate thicknesses and tensile strengths for the front side member and the crash box of the vehicle body structure; and manufacturing the vehicle body structure including the front side member and the crash box such that a ratio $F_{x1}/F_{x2}$ between an axial force $F_{x1}$ of a cross section where a line length in a cross-sectional direction is the minimum of the closed cross section structure in the crash box, and an axial force $F_{x2}$ of a cross section where a line length in a cross-sectional direction is the minimum of the closed cross section structure in the front side member, is equal to or less than the critical ratio of axial force, by using metal plates of the determined combination of plate thicknesses and tensile strengths.

Advantageous Effects of Invention

According to the present invention, at the time of front crash of a vehicle, a front side member can be deformed after a crash box is sufficiently axially crushed, an intrusion amount of a vehicle body component into a passenger compartment side can be suppressed to a predetermined level or less, and collision energy can be sufficiently absorbed. Furthermore, according to the present invention, it is possible to reduce a weight and size of a vehicle body without deteriorating collision performance such as absorption of the collision energy and the intrusion amount of the vehicle body component into the passenger compartment side at the time of the front crash of the vehicle, and it is possible to contribute to improvement of merchantability of vehicle.

Brief Description of Drawings

FIG. 1 is a diagram illustrating an example of a configuration of a vehicle body structure according to an embodiment of the present invention.

FIG. 2 is a diagram describing compressive deformation of a front side member and deformation of a crash box of the vehicle body structure at the time of front crash of a vehicle.

FIG. 3 is a graph schematically illustrating a load-stroke curve of the vehicle body structure at the time of the front crash of the vehicle.

FIG. 4 is a graph schematically illustrating a time transition of a load generated in each of a crash box and a front side member at the time of front crash of a vehicle having a vehicle body structure in which only the crash box is increased in strength.

FIG. 5 is a graph schematically illustrating a time transition of a load generated in each of a crash box and a front side member at the time of front crash of a vehicle having a vehicle body structure in which the front side member is increased in strength in accordance with an increase in strength of the crash box.

FIG. 6 is a diagram illustrating a plot of a relationship between an axial force ratio which is a ratio of an axial force of the crash box to an axial force of the front side member and a dash panel intrusion amount in which a dash lower panel is deformed and intruded into a passenger compartment side at the time of the front crash of the vehicle, and a critical ratio of axial force which is an axial force ratio at which the dash panel intrusion amount is saturated to a substantially constant value in the plot.

FIG. 7 is a diagram illustrating an example of cross-sectional shapes orthogonal to a vehicle front-rear direction of the front side member and the crash box of the vehicle body structure according to the embodiment of the present invention.

FIG. 8 is a flowchart illustrating a flow of processing in a method for designing the vehicle body structure according to the embodiment of the present invention.

FIG. 9 is a diagram describing a crashworthiness analysis of offset collision as front crash of a vehicle in an example.

FIG. 10 is a diagram illustrating a position where a dash panel intrusion amount, which is a deformation amount of a dash lower panel into a passenger compartment side due to the front crash of the vehicle, is measured in the example.

FIG. 11 is load-stroke curves of vehicle body structures obtained by the crashworthiness analysis at the time of the front crash of the vehicle in the example ((a) invention example (No. 3), (b) comparative example (No. 4)).

FIG. 12 is a graph illustrating a dash panel intrusion amount, a foot brake intrusion amount, and a collision energy absorption amount (crash box EA amount) by a crash box obtained for each of invention examples (No. 1, 3, 10) and a comparative example (No. 4) by the crashworthiness analysis at the time of the front crash of the vehicle in the example.

Description of Embodiments

Prior to describing a vehicle body structure and a method for designing the vehicle body structure according to an embodiment of the present invention, circumstances leading to the present invention will be described. In the drawings of the present application, an X direction, a Y direction, and a Z direction indicate a vehicle front-rear direction, a vehicle width direction, and a vehicle vertical direction, respectively.

<Circumstances leading to the present invention>

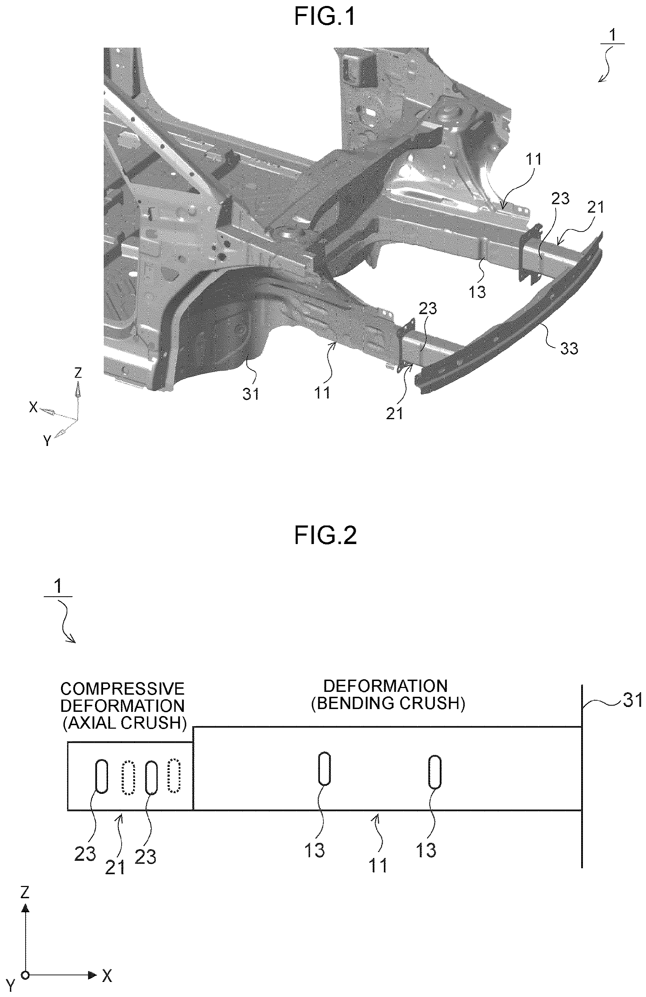

FIG. 2 is a diagram schematically illustrating a vehicle body structure 1 including a front side member 11 and a crash box 21, which are targets of the present invention.

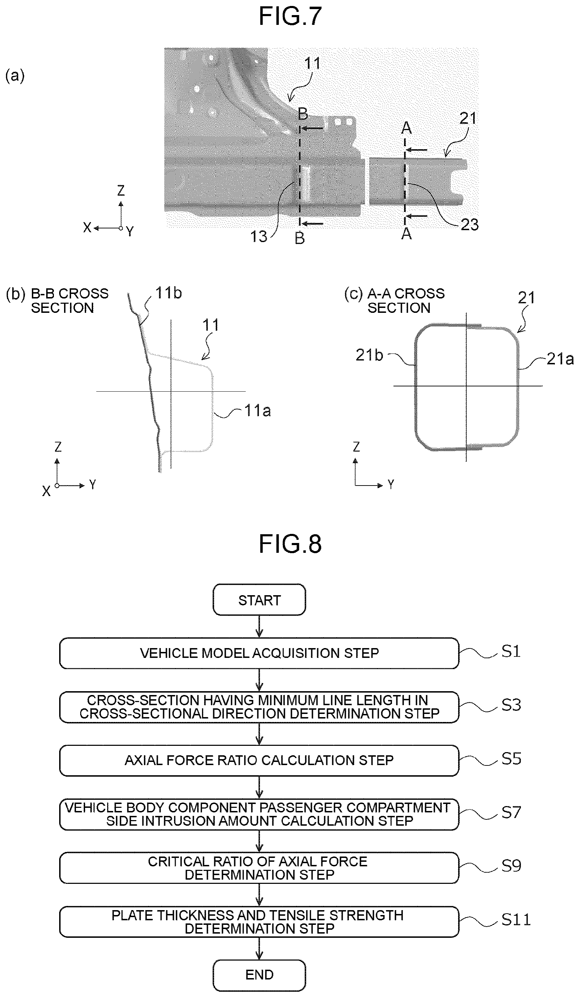

As illustrated in FIG. 1, the front side member 11 extends in the vehicle front-rear direction, and has an end portion on a rear side of a vehicle body connected to a dash lower panel 31 that partitions a cabin (passenger compartment) of a vehicle and the vehicle body structure 1. At the time of front crash of the vehicle, the front side member 11 is compressively deformed (axial crush) in a longitudinal direction (vehicle front-rear direction), and is deformed (bending crush) to bend in a direction orthogonal to the longitudinal direction (outside in a vehicle left-right direction or lower side in the vehicle vertical direction). Furthermore, since the front side member 11 is provided with beads 13 that cause deformation as illustrated in FIG. 2, deformation is induced starting from the beads 13 at the time of the front crash of the vehicle. As illustrated in FIG. 7(b), the front side member 11 has a closed cross section structure perpendicular to the longitudinal direction.

The crash box 21 extends from a distal end of the front side member 11 toward a front side of the vehicle body, and is compressively deformed (axial crush) in the longitudinal direction in a bellows-shape at the time of the front crash of the vehicle. The crash box 21 is provided with a plurality of beads 23 in the longitudinal direction, as illustrated in FIG. 2, for example, in order to induce bellows-shaped compressive deformation in the vehicle front-rear direction (longitudinal direction) at the time of the front crash. As illustrated in FIG. 7(c), the crash box 21 has a closed cross section structure perpendicular to the longitudinal direction.

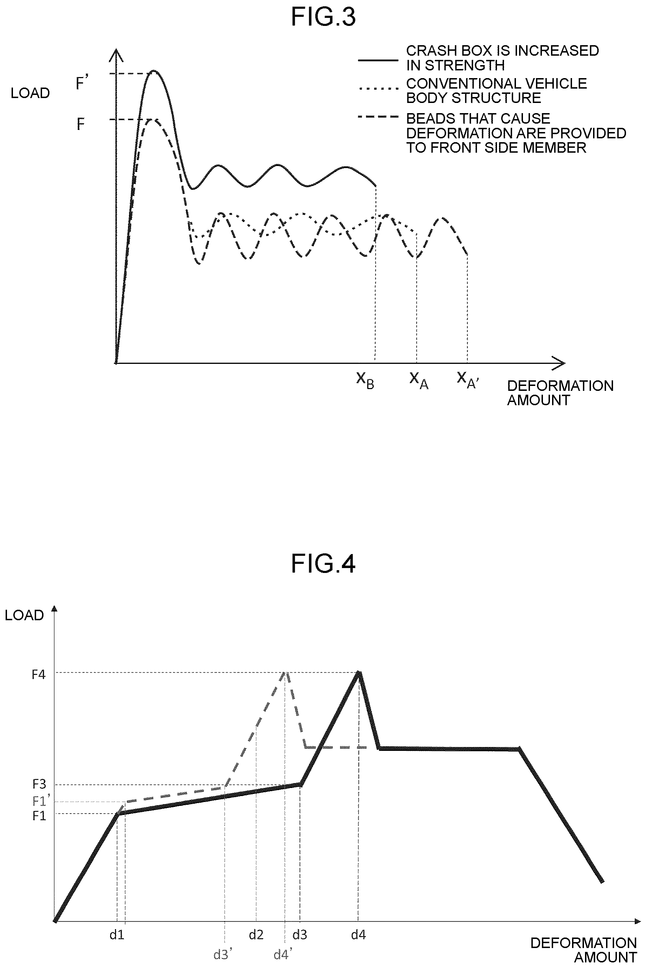

FIG. 3 is a graph schematically illustrating a load-stroke curve of the vehicle body structure 1 at the time of the front crash of the vehicle. In FIG. 3, a value obtained by integrating a load with a distance (stroke) (area of a range surrounded by a curve) represents a collision energy absorption amount.

As in the technique disclosed in Patent Literature 1, in the vehicle body structure 1 in which the beads 13 that cause deformation are provided to the front side member 11, the beads 13 that cause deformation cause deformation and the load is greatly reduced, so that smooth compressive deformation in the front side member 11 can be induced. However, in order to obtain a collision energy absorption amount equivalent to that of the vehicle body structure 1 in which the beads 13 that cause deformation are not provided to the front side member 11 (conventional vehicle body structure), it is necessary to increase a total length of the front side member 11 and the crash box 21 and to increase the stroke (deformation amount) until the front side member 11 is deformed ($x_A \rightarrow x_A'$ in FIG. 3).

On the other hand, from the viewpoint of weight reduction, by using a high-strength metal plate (for example, a high-tensile steel sheet) for the crash box 21, yield strength at the time of the front crash is improved ($F \rightarrow F'$ in FIG. 3), and the subsequent load is also improved. As a result, it is considered that the stroke (deformation amount) necessary for obtaining the collision energy absorption amount equivalent to that of the conventional vehicle body structure can be suppressed ($x_A \rightarrow x_B$ in FIG. 3).

However, even if the metal plate used for the crash box 21 is simply increased in strength, if the front side member 11 is deformed in the middle of the compressive deformation of the crash box 21, the compressive deformation of the crash box 21 is inhibited, and the collision energy absorption amount is reduced.

Therefore, the inventors have intensively studied this problem. As a result, the inventors have conceived that a balance between axial forces of the crash box 21 and the front side member 11 is optimized so as to increase the strength of the front side member 11 in accordance with the increase in the strength of the crash box 21. The axial force means an allowable load (loading capacity) in design in the longitudinal direction of a member having a closed cross section structure such as the crash box 21 or the front side member 11, and is expressed by Formula (1) described later.

The inventors have found that by optimizing the balance between the axial forces of the crash box 21 and the front side member 11 and then increasing the strength of the crash box 21, smooth bellows-shaped compressive deformation after the start of buckling deformation of the crash box 21 can be promoted. As a result, it has been found that the collision energy can be sufficiently absorbed by the crash box 21, and furthermore, safety of the cabin can be improved by setting an intrusion amount of a vehicle body component into a passenger compartment side to a predetermined level or less. Optimizing the balance between the axial forces of the crash box 21 and the front side member 11 will be described below.

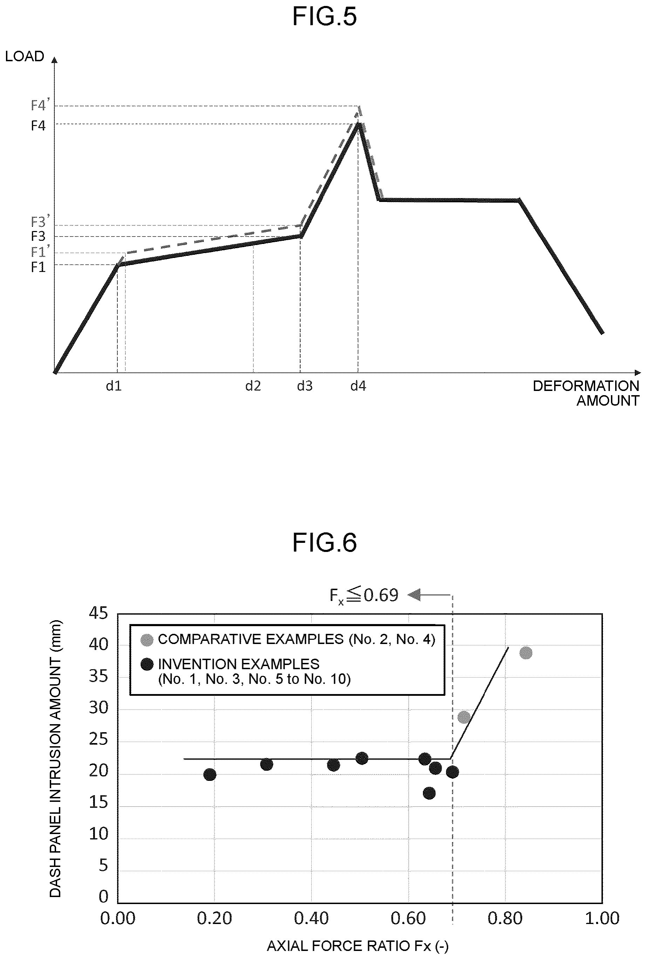

FIGS. 4 and 5 illustrate load-stroke curves when the vehicle body structure 1 including the front side member 11 and the crash box 21 as illustrated in FIG. 2 is deformed by receiving a collision load applied from a front direction side toward a rear direction side of the vehicle at the time of the front crash of the vehicle. The load-stroke curves illustrated in FIGS. 4 and 5 are each a graph schematically illustrating a change in a load applied to the front side member 11 with respect to a deformation amount (stroke) in the vehicle front-rear direction of the vehicle body structure 1.

As indicated by the solid line in FIG. 4, when a collision load is applied to the vehicle body structure 1 at the time of the front crash of the vehicle, the crash box 21 is first slightly elastically deformed in the compression direction in the vehicle front-rear direction. Thereafter, the crash box 21 buckles under a load F1 to start compressive deformation (axial crush) (deformation amount d1), and is completely crushed to end crushing (deformation amount d2). Subsequently, the front side member 11 undergoes transient elastic deformation, starts deformation by buckling when receiving a transmitted load F3 (deformation amount d3), reaches yield strength (maximum load), and completes the deformation (deformation amount d4).

When the high-tensile steel sheet is applied only to the crash box 21 to increase the strength, a buckling load of the crash box 21 increases (F1 → F1') as yield stress increases as indicated by the broken line in FIG. 4. For this reason, at the stage of the deformation amount d3' (< d2) before the crash box 21 is completely crushed, the load transmitted to the front side member 11 reaches F3, and the front side member 11 buckles and starts deformation. In this way, by inhibiting the compressive deformation of the crash box 21, the intrusion amount of the vehicle body component into the passenger compartment side increases by an amount corresponding to a decrease in the deformation amount of the crash box 21 due to the compressive deformation (= d2 - d3'). As a result, the crash box 21 was unable to sufficiently absorb the collision energy.

On the other hand, the broken line in FIG. 5 indicates a case where the high-tensile steel sheet is also applied to the front side member 11 to increase the strength in accordance with the increase in the strength of the crash box 21, and the load for the front side member 11 to buckle and start deformation is F3' (F3' > F3). In this case, the front side member 11 can be started to be deformed (deformation amount d3 > d2) after the crash box 21 is sufficiently compressively deformed and completely crushed to end crushing (deformation amount d2), so that the compressive deformation of the crash box 21 is not inhibited.

In addition, even if the crash box 21 is not increased in strength and a plate thickness of the closed cross section structure of the crash box 21 is increased or a line length in a cross-sectional direction of the closed cross section structure is increased so that the crash box 21 is less likely to be compressively deformed, the load when the crash box 21 buckles and starts the compressive deformation increases, and thus the compressive deformation of the crash box 21 is inhibited as in the case where the crash box 21 is increased in strength.

As described above, the inventors have paid attention to the balance between the yield strengths of the crash box 21 and the front side member 11 in order that the crash box 21 is sufficiently compressively deformed before the front side member 11 starts to be deformed, and have conceived of appropriately adjusting the plate thicknesses and tensile strengths used for the crash box 21 and the front side member 11.

Next, the inventors have studied how to optimize the balance between the yield strengths of the crash box 21 and the front side member 11. Therefore, the inventors have first used axial forces represented by the following Formula (1) as an index corresponding to the yield strengths of the crash box 21 and the front side member 11. The axial force is an index corresponding to an allowable load in design (loading capacity/load bearing capacity) in a member longitudinal direction. When the allowable load in design is a buckling load, a yielding strength may be used instead of a tensile strength of Formula (1).

Axial force (N) = line length in cross-sectional direction (mm) × plate thickness (mm) × tensile strength (MPa) (1) $\qquad$ (1)

The balance between the axial forces of the crash box 21 and the front side member 11 is expressed by an axial force ratio $(F_x)$ that is a ratio (= $F_{x1}/F_{x2}$) of an axial force $F_{x1}$ of the crash box 21 to an axial force $F_{x2}$ of the front side member 11.

Based on the axial force ratio thus defined, whether the balance between the axial forces of the crash box 21 and the front side member 11 can be appropriately adjusted has been studied. Therefore, a combination of plate thicknesses and tensile strengths of the crash box 21 and the front side member 11 has been changed into various combinations, and the relationship between the axial force ratio of the crash box 21 and the front side member 11 and the intrusion amount of the vehicle body component into the passenger compartment side at the time of the front crash of the vehicle has been investigated. As a result, it has been found that when the axial force ratio is equal to or less than a predetermined value, the intrusion amount of the vehicle body component is saturated at a certain level, as illustrated in FIG. 6.

In the present application, the axial force ratio between the crash box 21 and the front side member 11 at the time when the intrusion amount of the vehicle body component into the passenger compartment side is saturated is referred to as a critical ratio of axial force. FIG. 6 is a graph plotting the axial force ratio $F_x$ and a dash panel intrusion amount that is the intrusion amount of the vehicle body component into the passenger compartment side, when various combinations of plate thicknesses and material strengths shown in Table 1 described later are set for the front side member 11 and the crash box 21.

As described above, it has been found that the axial force ratio between the crash box 21 and the front side member 11 may be adjusted so as to be equal to or less than the critical ratio of axial force with respect to the balance between the axial forces of the crash box 21 and the front side member 11.

That is, it has been found that the balance between the yield strengths of the crash box 21 and the front side member 11 can be optimized by determining the plate thicknesses and the tensile strengths (or yielding strengths) of the crash box 21 and the front side member 11 such that the axial force ratio between the crash box 21 and the front side member 11 is an appropriate value less than or equal to the critical ratio of axial force. In the vehicle body structure 1 in which the axial force ratio between the crash box 21 and the front side member 11 is optimized, the front side member 11 could be deformed after the crash box 21 was sufficiently compressively deformed at the time of the front crash of the vehicle. As a result, it has been found that the intrusion amount of the vehicle body component into the passenger compartment side can be suppressed to a predetermined level or less, and that collision energy can be sufficiently absorbed by compressive deformation of the crash box 21. The present invention has been made in view of the above examination results, and a specific configuration thereof will be described below.

<Vehicle body structure>

FIG. 1 illustrates the vehicle body structure 1 according to the embodiment of the present invention as an example. The vehicle body structure 1 includes the pair of left and right front side members 11 extending in the vehicle front-rear direction and having the closed cross section structure, and the crash box 21 extending from the distal end of each of the front side members 11 toward the front side of the vehicle body and having the closed cross section structure.

As illustrated in FIG. 7, for example, the front side member 11 has the closed cross section structure formed by joining a front side member inner 11a having a hat-shaped cross section and a front side member outer 11b having a panel shape.

As illustrated in FIG. 7, for example, the crash box 21 has the closed cross section structure formed by joining a crash box inner 21a having a U-shaped cross section and a crash box outer 21b having a U-shaped cross section. In the vehicle body structure 1, as illustrated in FIG. 1, a bumper beam 33 extending in the vehicle width direction is connected to a distal end of each crash box 21.

In the vehicle body structure 1, the plate thickness and the tensile strength of the metal plate used for each of the front side member 11 and the crash box 21 are set such that the ratio $F_{x1}/F_{x2}$ between the axial force $F_{x1}$ of the crash box 21 and the axial force $F_{x2}$ of the front side member 11 is equal to or less than a predetermined critical ratio of axial force. It is assumed that the axial force $F_{x1}$ of the crash box 21 is given in a cross section in which the line length in the cross-sectional direction is the minimum of the closed cross section structure in the crash box 21. In addition, It is assumed that the axial force $F_{x2}$ of the front side member 11 is given in a cross section in which the line length in the cross-sectional direction is the minimum of the closed cross section structure in the front side member 11.

As a result, in the vehicle body structure 1, the front side member 11 is deformed after the crash box 21 is sufficiently compressively deformed at the time of the front crash of the vehicle.

As described above, according to the vehicle body structure 1 of the present embodiment, the front side member 11 can be deformed after the crash box 21 is sufficiently compressively deformed at the time of the front crash of the vehicle. As a result, without increasing a length of the front side member 11 in the vehicle front-rear direction, the intrusion amount of the vehicle body component into the vehicle interior side can be made equal to or less than a predetermined level, and collision energy can be sufficiently absorbed by the crash box 21.

Furthermore, in the present invention, when the axial force ratio between the crash box 21 and the front side member 11 is equal to or less than a predetermined critical ratio of axial force, a metal plate having a high tensile strength and a small plate thickness can be used for each of the crash box 21 and the front side member 11. As a result, it is possible to reduce a weight and size of the vehicle body without deteriorating collision performance such as the absorption of the collision energy and the intrusion of the vehicle body component into the passenger compartment side at the time of the front crash of the vehicle, and it is possible to contribute to improvement of the merchantability of vehicle.

As illustrated in FIG. 6 described above, the critical ratio of axial force may be a value determined based on a passenger compartment side intrusion amount that is a deformation amount of a vehicle body component (for example, the dash lower panel 31) toward the passenger compartment side at the time of the front crash of the vehicle.

The lower limit value of the axial force ratio does not cause a large difference in the passenger compartment side intrusion amount as long as it is within the range of the plate thickness and tensile strength (or yielding strength) of a metal plate (for example, a steel sheet) practically used for each of the front side member 11 and the crash box 21.

For example, in the vehicle body structure 1 illustrated in FIG. 1, a steel sheet practically used as a material of each of the front side member 11 and the crash box 21 has a plate thickness of 1.2 mm to 2.3 mm and a tensile strength of 270 MPa class to 1470 MPa class. In this case, among the steel sheets applicable as the crash box 21, the steel sheet having the minimum axial force $F_{x1}$ has a plate thickness of 1.8 mm and a tensile strength of 270 MPa class. Among the steel sheets applicable as the front side member 11, the steel sheet having the maximum axial force $F_{x2}$ has a plate thickness of 1.0 mm (outer) and 1.6 mm (inner), and a tensile strength of 1470 MPa class. Therefore, the axial force ratio 0.15 given by the combination of plate thicknesses and tensile strengths of these steel sheets is the lower limit value. Also in the vehicle body structure 1 having the axial force ratio of 0.15, the front side member 11 was deformed after the crash box 21 was sufficiently axially crushed, and the passenger compartment side intrusion amount of the vehicle body component was not increased.

<Method for designing vehicle body structure>

A method for designing the vehicle body structure according to the embodiment of the present invention is for designing the vehicle body structure 1 including the pair of left and right front side members 11 and the crash box 21 as illustrated in FIG. 1. The method for designing the vehicle body structure according to the present embodiment is for designing the vehicle body structure such that the front side member 11 is deformed after the crash box 21 is sufficiently compressively deformed at the time of the front crash of the vehicle.

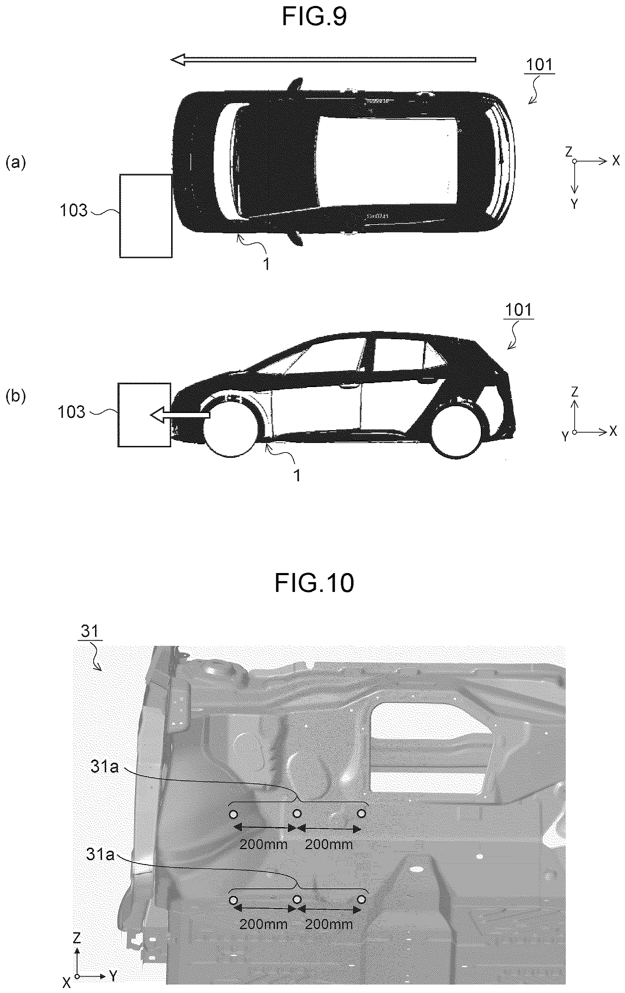

As illustrated in FIG. 8, the method for designing the vehicle body structure according to the present embodiment includes a vehicle model acquisition step S1, a cross-section having minimum line length in cross-sectional direction determination step S3, an axial force ratio calculation step S5, and a vehicle body component passenger compartment side intrusion amount calculation step S7. Furthermore, as illustrated in FIG. 8, the method for designing the vehicle body structure according to the present embodiment includes a critical ratio of axial force determination step S9 and a plate thickness and tensile strength determination step S11. Hereinafter, each of the above steps will be described with reference to FIGS. 8 and 9 in the case of designing the vehicle body structure 1 illustrated in FIG. 1 described above.

<<Vehicle model acquisition step>>

In the vehicle model acquisition step S1, a vehicle model having the vehicle body structure 1 is acquired, and a portion for evaluating the intrusion amount of the vehicle body component into the passenger compartment side at the time of the front crash of a vehicle model 101 illustrated in FIG. 9 is set. In the present embodiment, as illustrated in FIG. 9, offset collision to a collision object 103 is targeted as the front crash of the vehicle model 101. In the present embodiment, a vehicle body component for evaluating the intrusion amount into the passenger compartment side at the time of the front crash of the vehicle model 101 is defined as the dash lower panel 31 (FIG. 1). Then, as illustrated in FIG. 10, an intrusion amount evaluation part 31a is set in the dash lower panel 31, and the intrusion amount into the passenger compartment side in the intrusion amount evaluation part 31a is calculated.

<<Cross-section having minimum line length in cross-sectional direction determination step>>

In the cross-section having minimum line length in cross-sectional direction determination step S3, a cross-section having a line length in a cross-sectional direction is the minimum is determined for each of the crash box 21 and the front side member 11 in the vehicle body structure 1 of the acquired vehicle model 101. In the present embodiment, for the crash box 21 and the front side member 11 of the vehicle body structure 1 illustrated in FIG. 7(a), an A-A cross section (FIG. 7(c)) and a B-B cross section (FIG. 7(b)) in which the bead 23 and the bead 13 that causes deformation are respectively provided, are determined as cross sections each having the minimum line length in the cross-sectional direction in a cross section perpendicular to the longitudinal direction.

<<Axial force ratio calculation step>>

In the axial force ratio calculation step S5, first, the axial forces $F_{x1}$ and $F_{x2}$ in the cross-sections each of which the line length in the cross-sectional direction is the minimum, which are determined for the crash box 21 and the front side member 11 in the vehicle model 101 are calculated by Formula (1). In the axial force ratio calculation step S5, the ratio $F_{x1}/F_{x2}$ (= axial force ratio $F_x$) between the axial force $F_{x1}$ calculated for the crash box 21 and the axial force $F_{x2}$ calculated for the front side member 11 is calculated. In the axial force ratio calculation step S5, the axial forces $F_{x1}$ and $F_{x2}$ and the axial force ratio $F_x$ are calculated for various combinations within the range of the plate thicknesses and the tensile strengths (or yielding strengths) of metal plates (for example, steel sheets) practically used for the front side member 11 and the crash box 21.

<<Vehicle body component passenger compartment side intrusion amount calculation step>>

In the vehicle body component passenger compartment side intrusion amount calculation step S7, first, a crashworthiness analysis is performed on the front crash of the vehicle model 101 in which various combinations of plate thicknesses and tensile strengths of the metal plates used for the front side member 11 and the crash box 21 are set. Then, the intrusion amount of the vehicle body component (dash lower panel 31) into the passenger compartment side at the intrusion amount evaluation part 31a set in the vehicle model 101 at the time of the front crash of the vehicle model 101 is calculated.

The crashworthiness analysis of the vehicle model 101 in the vehicle body component passenger compartment side intrusion amount calculation step S7 may be performed by executing crashworthiness analysis software.

<<Critical ratio of axial force determination step>>

In the critical ratio of axial force determination step S9, the critical ratio of axial force is determined from a relationship between the axial force ratio calculated in the axial force ratio calculation step S5 and the intrusion amount calculated in the vehicle body component passenger compartment side intrusion amount calculation step S7. As the axial force ratios, axial force ratios calculated for various combinations of plate thicknesses and tensile strengths of the metal plates used for the front side member 11 and the crash box 21 in the axial force ratio calculation step S5 are used. On the other hand, as the intrusion amounts of the vehicle body component, values calculated by the crashworthiness analysis of the vehicle model 101 in which various combinations are set as the plate thicknesses and the tensile strengths of the metal plates used for the front side member 11 and the crash box 21 in vehicle body component passenger compartment side intrusion amount calculation step S7, are used.

In the critical ratio of axial force determination step S9, the relationship between the axial force ratio and the intrusion amount of the vehicle body component can be expressed as illustrated in FIG. 6. As illustrated in FIG. 6, as the axial force ratio decreases, the intrusion amount of the vehicle body component decreases. However, when the axial force ratio is 0.69 or less, the intrusion amount saturates at a value within a substantially constant range (within ±20%). From this, it can be determined that the critical ratio of axial force is 0.69.

<<Plate thickness and tensile strength determination step>>

In the plate thickness and tensile strength determination step S11, a combination of plate thicknesses and tensile strengths of the metal plates used for the front side member 11 and the crash box 21 is determined so as to be equal to or less than the critical ratio of axial force determined in the critical ratio of axial force determination step S9. In determining the combination of plate thicknesses and tensile strengths of the metal plates used in the front side member 11 and the crash box 21, the combination may be selected from various combinations of plate thicknesses and tensile strengths for which the axial force ratios have been calculated in the axial force ratio calculation step S5.

As described above, according to the method for designing the vehicle body structure according to the embodiment of the present invention, it is possible to design the vehicle body structure 1 such that the front side member is deformed after the crash box 21 is sufficiently compressively deformed at the time of the front crash of the vehicle. At the time of the front crash of the vehicle including the vehicle body structure 1 designed as described above, the intrusion amount of the vehicle body component into the vehicle interior side can be set to a predetermined level or less without increasing the length of the front side member 11 in the vehicle front-rear direction, and collision energy can be sufficiently absorbed by the crash box 21.

In the plate thickness and tensile strength determination step, the plate thicknesses and the tensile strengths can be appropriately determined as long as the combination of plate thicknesses and tensile strengths achieves the axial force ratio equal to or less than the critical ratio of axial force. However, in the plate thickness and tensile strength determination step, for example, as described below, the plate thicknesses and the tensile strengths may be determined using weights as an index.

In this case, first, in the axial force ratio calculation step S5, weights of the front side member 11 and the crash box 21 are calculated in addition to the axial force ratio for each of various combinations of plate thicknesses and tensile strengths of the metal plates used for the front side member 11 and the crash box 21.

Then, in the plate thickness and tensile strength determination step S11, a combination of plate thicknesses and tensile strengths that minimizes the total weight of the front side member 11 and the crash box 21 calculated in the axial force ratio calculation step is determined among the combinations of plate thicknesses and tensile strengths that achieve the axial force ratios equal to or less than the critical ratio of axial force. As a result, it is possible to design the vehicle body structure 1 that achieves weight reduction of the vehicle body while securing collision performance.

In the above description, the optimum plate thicknesses and tensile strengths are determined using weights as an index, but the rigidity of the vehicle body structure or the collision energy absorption amount may be used as an index.

When the combination of plate thicknesses and tensile strengths of the metal plates used for the front side member 11 and the crash box 21 is determined using the collision energy absorption amount of the crash box 21 as an index, in the plate thickness and tensile strength determination step, a combination of plate thicknesses and tensile strengths that maximizes the axial force $F_{x1}$ calculated for the crash box 21 is determined among the combinations of plate thicknesses and tensile strengths that achieve the axial force ratios $F_x$ equal to or less than the critical ratio of axial force. This makes it possible to maximize the yield strength of the crash box 21 and maximize the collision energy absorption amount (value obtained by integrating the load in the load-stroke curve with the distance (stroke)) while promoting the sufficient compressive deformation of the crash box 21.

In addition, the vehicle body component passenger compartment side intrusion amount calculation step S7 according to the present embodiment uses a full vehicle model that models the entire vehicle as the vehicle model 101. However, a partial vehicle model that models a vehicle body structure and a vehicle body component around the vehicle body structure in the vehicle may be used.

In addition, the method for designing the vehicle body structure according to the present embodiment may be performed using a designing device of the vehicle body structure configured by a computer. In the designing device of the vehicle body structure, the computer may execute a program for executing each step of the method for designing the vehicle body structure.

<Method for manufacturing vehicle body structure>

A method for manufacturing the vehicle body structure according to the embodiment of the present invention determines the combination of plate thicknesses and tensile strengths for the front side member 11 and the crash box 21 of the vehicle body structure 1 by the method for designing the vehicle body structure according to the embodiment of the present invention described above. Then, using the metal plates of the combination of the determined plate thicknesses and tensile strengths, the vehicle body structure 1 including the front side member 11 and the crash box 21 is manufactured such that the ratio $F_{x1}/F_{x2}$ of the axial force $F_{x1}$ of the cross section where the line length in the cross-sectional direction is the minimum of the closed cross section structure in the crash box 21 and the axial force $F_{x2}$ of the cross section where the line length in the cross-sectional direction is the minimum of the closed cross section structure in the front side member 11 is equal to or less than the critical ratio of axial force determined in the critical ratio of axial force determination step S9.

According to the method for manufacturing the vehicle body structure according to the embodiment of the present invention, it is possible to manufacture the vehicle body structure 1 such that the front side member 11 is deformed after the crash box 21 is sufficiently compressively deformed at the time of the front crash of the vehicle. At the time of the front crash of the vehicle including the vehicle body structure 1 manufactured as described above, the intrusion amount of the vehicle body component into the vehicle interior side can be set to a predetermined level or less. Further, collision energy can be sufficiently absorbed by the crash box 21 without increasing the length of the front side member 11 in the vehicle front-rear direction.

[Example]

Since analysis for verifying the operation and effect of the present invention was performed, this will be described below. In the analysis, as illustrated in FIG. 9, the vehicle model 101 having the vehicle body structure 1 (FIG. 1) was used, and offset collision in which the collision object 103 collides with a front surface of the vehicle model 101 in a state of being shifted from the center of the vehicle model 101 in the vehicle width direction was targeted. Then, based on the analysis of the offset collision, the optimum plate thicknesses and tensile strengths for allowing the front side member 11 to be deformed after the crash box 21 is sufficiently compressively deformed in the vehicle body structure 1 were determined.

First, the vehicle model 101 having the vehicle body structure 1 illustrated in FIG. 1 was acquired, and the intrusion amount evaluation part for evaluating the intrusion amount of the vehicle body component into the passenger compartment side at the time of the front crash of the vehicle model 101 was set. In the example, the dash lower panel 31 and a foot brake (not illustrated) were used as vehicle body components for evaluating the intrusion amount into the passenger compartment side. For the dash lower panel 31, as illustrated in FIG. 10, six intrusion amount evaluation parts 31a were set. In addition, the foot brake itself was set as the intrusion amount evaluation part.

Next, for the crash box 21 and the front side member 11 in the vehicle body structure 1 of the vehicle model 101 illustrated in FIG. 7(a), the cross-sections each of which the line length in the cross-sectional direction is the minimum, each having the minimum line length in the cross-sectional direction, were determined as the A-A cross section (FIG. 7(c)) and the B-B cross section (FIG. 7(b)), respectively.

Next, for the crash box 21 and the front side member 11, the axial forces $F_{x1}$ and $F_{x2}$ at the cross-sections each of which the line length in the cross-sectional direction is the minimum were respectively calculated, and the axial force ratio $F_x$ ($= F_{x1}/F_{x2}$) was calculated. The axial force ratios $F_x$ were calculated for various combinations of plate thicknesses and tensile strengths of the metal plates used for the front side member 11 and the crash box 21. PRIMER 1.80 (Oasys Primer ver. 1.80 for LS-DYNA) of ARUP software manufactured by JSOL CORPORATION was used to calculate the respective axial forces of the crash box 21 and the front side member 11. The weights of the crash box 21 and the front side member 11 were calculated for various combinations of plate thicknesses and tensile strengths of the metal plates used for the front side member 11 and the crash box 21.

Table 1 shows the combinations of plate thicknesses and tensile strengths set for the crash box 21 and the front side member 11, and the axial force of each of the crash box 21 and the front side member 11, and the axial force ratio $F_x$ calculated for each combination.

Table 1

(Table 1)

| No | Crash box | | | Front side member | | | | Axial force ratio $F_x$ (-) | Dash intrusion amount (mm) | Lightened weight (g/unit) | Remarks |
|---|---|---|---|---|---|---|---|---|---|---|---|
| | Tensile strength (MPa) | Plate thickness (mm) | Axial force (kN) | Tensile strength (MPa) | Plate thickness(mm) | | Axial force (kN) | | | | |
| | | | | | Inner | Outer | | | | | |
| 1 | 440 | 2.3 | 304.9 | 780 | 1.65 | 2.1 | 603.8 | 0.50 | 22.5 | 0 | Invention Example 1 |
| 2 | 980 | 2.3 | 595.6 | 1180 | 1.65 | 2.1 | 833.5 | 0.71 | 28.9 | 0 | Comparative Example 1 |
| 3 | 980 | 1.8 | 466.1 | 1180 | 1.2 | 1.8 | 674.9 | 0.69 | 20.4 | -1251 | Invention Example 2 |
| 4 | 1180 | 1.8 | 568.8 | 1180 | 1.2 | 1.8 | 674.9 | 0.84 | 38.9 | -1251 | Comparative Example 2 |
| 5 | 440 | 2.3 | 304.9 | 1470 | 1.2 | 1.8 | 991.8 | 0.31 | 21.6 | -930 | Invention Example 3 |
| 6 | 980 | 1.4 | 362.5 | 980 | 1.2 | 1.8 | 571.7 | 0.63 | 22.4 | -1508 | Invention Example 4 |
| 7 | 1180 | 1.4 | 442.4 | 1180 | 1.2 | 1.8 | 674.9 | 0.66 | 21.0 | -1508 | Invention Example 5 |
| 8 | 1180 | 1.4 | 442.4 | 1470 | 1.2 | 1.8 | 991.8 | 0.45 | 21.5 | -1508 | Invention Example 6 |
| 9 | 1470 | 1.4 | 637.9 | 1470 | 1.2 | 1.8 | 991.8 | 0.64 | 17.1 | -1508 | Invention Example 7 |
| 10 | 270 | 1.8 | 128.4 | 1180 | 1.2 | 1.8 | 674.9 | 0.19 | 20.0 | -1251 | Invention Example 8 |

Subsequently, the crashworthiness analysis of offset collision of the vehicle model 101 in which various combinations of plate thicknesses and tensile strengths were set was performed, and the intrusion amount of the vehicle body component into the passenger compartment side at the intrusion amount evaluation part set in the vehicle model 101 was calculated. In the crashworthiness analysis, an initial speed of the vehicle model 101 was set to 64 km/h.

Next, the relationship between the axial force ratio $F_x$ of the crash box 21 and the front side member 11 and the intrusion amount in the intrusion amount evaluation part obtained by the crashworthiness analysis of the vehicle model 101, obtained for each of combinations of plate thicknesses and tensile strengths shown in No. 1 to No. 10 in Table 1 was plotted. Then, the critical ratio of axial force was determined from the relationship between the plotted axial force ratios and the intrusion amounts. FIG. 6 is a graph plotting the relationship between the axial force ratios and the dash panel intrusion amounts. As illustrated in Table 1 and FIG. 6, it was shown that in a region where the axial force ratios are larger than 0.69 (No. 2 and No. 4 in Table 1), the dash panel intrusion amounts tend to decrease as the axial force ratios decrease. In a region where the axial force ratios are 0.69 or less (No. 1, No. 3, and No. 5 to No. 10 in Table 1), the dash panel intrusion amounts were within a range of $\pm 20\%$ and were substantially constant regardless of the axial force ratios. From this, the critical ratio of axial force to the dash panel intrusion amount was determined to be 0.69.

In Table 1, in the crash box 21 and the front side member 11 of the combinations of plate thicknesses and tensile strengths shown in No. 1, No. 3, and No. 5 to No. 10, the axial force ratios $F_x$ were values equal to or less than the critical ratio of axial force determined in FIG. 6. Therefore, the vehicle body structure 1 including the crash box 21 and the front side member 11 having these combinations of plate thicknesses and tensile strengths was within a scope of the present invention (invention example).

On the other hand, in Table 1, in the crash box 21 and the front side member 11 of the combinations of plate thicknesses and tensile strengths shown in No. 2 and No. 4, the axial force ratios $F_x$ were values larger than the critical ratio of axial force determined in FIG. 6. Therefore, the vehicle body structure 1 including the crash box 21 and the front side member 11 having these combinations of plate thicknesses and tensile strengths was out of the scope of the present invention (comparative example).

In addition, Table 1 shows a result of obtaining a weight difference of the crash box 21 and the front side member 11 in each of combinations of plate thicknesses and tensile strengths according to No. 2 to No. 10 based on weights when plate thicknesses of No. 1 were set for the crash box 21 and the front side member 11.

In each of the invention examples shown in No. 3 and No. 6 to No. 9, the tensile strengths of the crash box 21 and the front side member 11 were made higher and the plate thicknesses thereof were made thinner than those in No. 1, so that the crash box 21 and the front side member 11 were reduced in weight without reducing the dash panel intrusion amount.

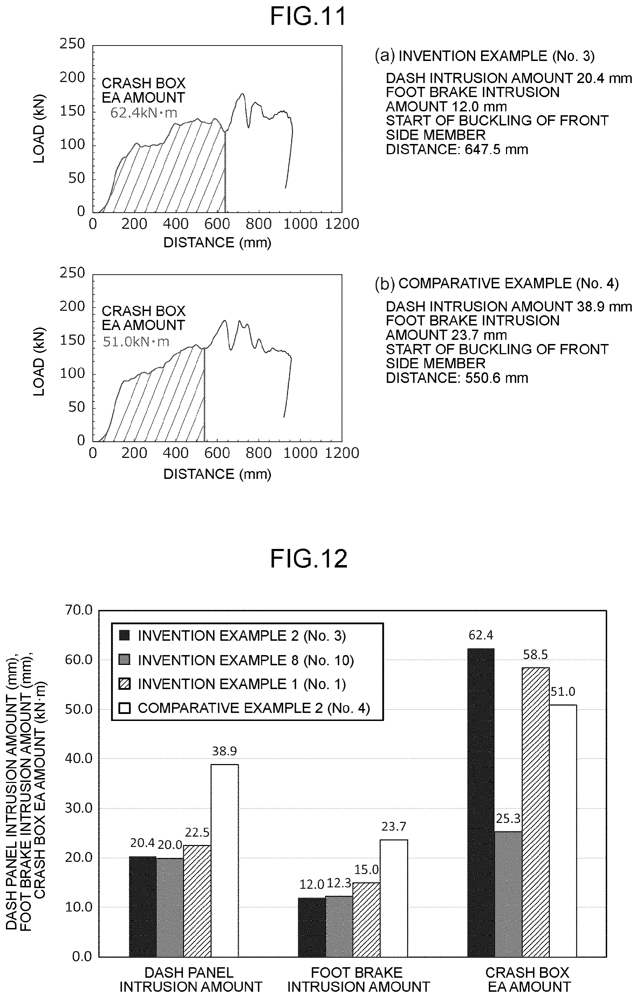

FIG. 11 illustrates, as an example, load-stroke curves obtained by the crashworthiness analysis of offset collision of the vehicle model 101 in which the combinations of plate thickness and tensile strengths of the crash box 21 and the front side member 11 were No. 3 (Invention Example 2) and No. 4 (Comparative Example 2) shown in Table 1.

FIG. 12 is a graph illustrating results of the dash panel intrusion amounts, foot brake intrusion amounts, and the collision energy absorption amounts by the crash box (crash box energy absorption (EA) amount) in the invention examples (No. 1, No. 3, and No. 10) and the comparative example (No. 4). In FIGS. 11 and 12, the crash box EA amount is the collision energy absorption amount due to the compressive deformation of the crash box 21 until a distance and time at which buckling (deformation) of the front side member 11 starts.

When the combination of plate thicknesses and tensile strengths of the crash box 21 and the front side member 11 was No. 1 (Invention Example 1) shown in Table 1, the crash box EA amount until a distance 668.8 mm and time 0.041 s at which buckling of the front side member 11 starts was 58.5 kN ·m as illustrated in FIGS. 11(a) and 12. The dash panel intrusion amount was 22.5 mm, and the foot brake intrusion amount was 15.0 mm.

The combination of plate thicknesses and tensile strengths of the crash box 21 and the front side member 11 of No. 3 (Invention Example 2) in Table 1 has the axial force ratio $F_x$ larger than that of No. 1 (Invention Example 1) (No. 1: 0.50, No. 3: 0.69), and the axial force ratio $F_x$ of No. 3 (Invention Example 2) is equal to the critical ratio of axial force (= 0.69). As illustrated in FIG. 11(a), smooth bellows-shaped compressive deformation of the crash box 21 could be promoted until the start of buckling (deformation) of the front side member 11. As a result, the crash box EA amount was improved by 6.6% (No. 3: 62.4 kN·m, No. 1: 58.5 kN·m), the dash panel intrusion amount was reduced by 9% (No. 3: 20.4 mm, No. 1: 22.5 mm), and the foot brake intrusion amount was reduced by 20% (No. 3: 12.0 mm, No. 1: 15.0 mm) as compared with No. 1 (Invention Example 1). Further, the axial force $F_{x1}$ of the crash box 21 of No. 3 (Invention Example 2) was 53% greater than that of No. 1 (Invention Example 1) (No. 1: 304.9 kN, No. 3: 466.1 kN), and due to sufficient compressive deformation of the crash box 21, the crash box EA amount of No. 3 (Invention Example) was improved by 6.6% (No. 3: 62.4 kN·m, No. 1: 58.5 kN·m) as compared with No. 1 (Invention Example 1).

In the combination of plate thicknesses and tensile strengths of the crash box 21 and the front side member 11 of No. 4 (Comparative Example 2) in Table 1, the axial force ratio $F_x$ was larger than the critical ratio of axial force 0.69 (= 0.84), and as illustrated in FIG. 11(b), the distance to the start of buckling (deformation) of the front side member 11 was 18% shorter than that in No. 1 (Invention Example 1) (No. 4: 550.6 mm, No. 1: 668.8 mm), and the compressive deformation of the crash box 21 could not be sufficiently progressed. For this reason, in No. 4 (Comparative Example 2), the tensile strength of the steel sheet used in the crash box 21 was 1180 MPa, and the axial force was increased by 87% (No. 4: 568.8 kN, No. 1: 304.9 kN) as compared with No. 1 (Invention Example 1). However, the crash box EA amount was decreased by 12.8% (No. 4: 51.0 kN·m, No. 1: 58.5 kN·m) as compared with No. 1 (Invention Example 1). Further, in No. 4 (Comparative Example 1), the deformation amount of compressive deformation of the crash box 21 until the front side member 11 starts to be deformed was reduced, so that the dash panel intrusion amount was increased by 73% (No. 4: 38.9 mm, No. 1: 22.5 mm) and the foot brake intrusion amount was increased by 58% (No. 4: 23.7 mm, No. 1: 15.0 mm).

In the combination of plate thicknesses and tensile strengths of the crash box 21 and the front side member 11 shown in No. 10 (Invention Example 8) in Table 1, the axial force ratio $F_x$ was smaller (No. 1: 0.50, No. 10: 0.19) than that in No. 1 (Invention Example 1), and smooth bellows-shaped axial crush of the crash box could be promoted until the start of buckling (deformation) of the front side member 11. As a result, in No. 10 (Invention Example 8), as compared with No. 1 (Invention Example 1), the dash panel intrusion amount was reduced by 11% (No. 10: 20.0 mm, No. 1: 22.5 mm), and the foot brake intrusion amount was reduced by 18% (No. 10: 12.3 mm, No. 1: 15.0 mm). In No. 10 (Invention Example 8), a steel sheet having a tensile strength lower than that of No. 1 (Invention Example 1) was used in the crash box 21 (No. 1: 440 MP class, No. 10: 270 MPa class), so that the crash box EA amount was reduced by 57% (No. 10: 25.3 kN·m, No. 1: 58.5 kN·m).

In the present example, the axial force ratio and the weights of the front side member 11 and the crash box 21 were further calculated when the combination of plate thicknesses and tensile strengths was changed, and the optimum combination of plate thicknesses and tensile strengths was determined from the viewpoint of weight reduction of the vehicle body structure 1.

Table 2 shows the result of obtaining the axial force ratios for various combinations of plate thicknesses and tensile strengths.

With respect to the various combinations of plate thicknesses and tensile strengths, Table 3 shows a weight difference of each of the front side member 11 and the crash box 21 based on the crash box 21 and the front side member 11 according to No. 1 (Invention Example 1) in Table 1 described above, and a weight difference obtained by adding the weight differences.

Table 2

(Table 2)

| Front side member | | | | Crash box (tensile strength/plate thickness/axial force) | | | | | | | | | | | |
| --- | --- | --- | --- | --- | --- | --- | --- | --- | --- | --- | --- | --- | --- | --- | --- |
| Tensile strength (MPa) | Plate thickness (mm) | | Axial force (kN) | 270MPa 1.8mm | 440MPa 2.3mm | 980MPa 1.4mm | 980MPa 1.6mm | 1180MPa 1.4mm | 980MPa 1.8mm | 1180MPa 1.6mm | 1180MPa 1.8mm | 1470MPa 1.2mm | 980MPa 2.3mm | 1470MPa 1.4mm | 1470MPa 1.6mm |
| | Inner | Outer | | 128.4kN | 304.9kN | 362.5kN | 414.3kN | 442.4kN | 466.1kN | 505.6kN | 546.8kN | 568.8kN | 595.6kN | 637.9kN | 729.1kN |
| 980 | 1.2 | 1.8 | 571.7 | 0.22 | 0.53 | 0.63 | 0.72 | 0.77 | 0.82 | 0.88 | 0.99 | 0.96 | 1.04 | 1.12 | 1.28 |
| 780 | 1.65 | 2.1 | 603.8 | 0.21 | 0.50 | 0.60 | 0.69 | 0.73 | 0.77 | 0.84 | 0.94 | 0.91 | 0.99 | 1.06 | 1.21 |
| 1180 | 1.0 | 1.6 | 606.3 | 0.21 | 0.50 | 0.60 | 0.68 | 0.73 | 0.77 | 0.83 | 0.94 | 0.90 | 0.98 | 1.05 | 1.20 |
| 1180 | 1.2 | 1.8 | 674.9 | 0.19 | 0.45 | 0.54 | 0.61 | 0.66 | 0.69 | 0.75 | 0.84 | 0.81 | 0.88 | 0.95 | 1.08 |
| 1180 | 1.65 | 2.1 | 833.5 | 0.15 | 0.37 | 0.43 | 0.50 | 0.53 | 0.56 | 0.61 | 0.68 | 0.66 | 0.71 | 0.77 | 0.87 |
| 1470 | 1.0 | 1.6 | 865.9 | 0.15 | 0.35 | 0.42 | 0.48 | 0.51 | 0.54 | 0.58 | 0.66 | 0.63 | 0.69 | 0.74 | 0.84 |
| 1470 | 1.2 | 1.8 | 991.8 | 0.13 | 0.31 | 0.37 | 0.42 | 0.45 | 0.47 | 0.51 | 0.57 | 0.55 | 0.60 | 0.64 | 0.74 |

Table 3

(Table 3)

| Front side member | | | Crash box (tensile strength/plate thickness/weight difference) | | | | | | | | | | | |
|---|---|---|---|---|---|---|---|---|---|---|---|---|---|---|
| Tensile strength (MPa) | Plate thickness (mm) | | Weight difference (g) | 270MPa 1.8mm -320.99 | 440MPa 2.3mm 0g | 980MPa 1.4mm -577.6h | 980MPa 1.6mm -449.2g | 1180MPa 1.4mm -577.6g | 980MPa 1.8mm -320.99 | 1180MPa 1.6mm -449.2g | 1180MPa 1.8mm -320.9g | 1470MPa 1.2mm -705.9g | 980MPa 2.3mm 0g | 1470MPa 1.4mm -577.6g | 1470MPa 1.6mm -449.2g |
| | Inner | Outer | | | | | | | | | | | | | |
| 980 | 1.2 | 1.8 | -930.4 | -1251.2 | -930.4 | -1507.9 | -1379.6 | -1507.9 | -1251.2 | -1379.6 | -1251.2 | -1636.3 | -930.4 | -1507.9 | -1379.6 |
| 780 | 1.65 | 2.1 | 0.0 | -320.9 | 0.0 | -577.6 | -449.2 | -577.6 | -320.9 | -449.2 | -320.9 | -705.9 | 0.0 | -577.6 | -449.2 |
| 1180 | 1.0 | 1.6 | -1445.3 | -1766.2 | -1445.3 | -2022.9 | -1894.5 | -2022.9 | -1766.2 | -1894.5 | -1766.2 | -2151.2 | -1445.3 | -2022.9 | -1894.5 |
| 1180 | 1.2 | 1.8 | -930.4 | -1251.2 | -930.4 | -1507.9 | -1379.6 | -1507.9 | -1251.2 | -1379.6 | -1251.2 | -1636.3 | -930.4 | -1507.9 | -1379.6 |
| 1180 | 1.65 | 2.1 | 0.0 | -320.9 | 0.0 | -577.6 | -449.2 | -577.6 | -320.9 | -449.2 | -320.9 | -705.9 | 0.0 | -577.6 | -449.2 |
| 1470 | 1.0 | 1.6 | -1445.3 | -1766.2 | -1445.3 | -2022.9 | -1894.5 | -2022.9 | -1766.2 | -1894.5 | -1766.2 | -2151.2 | -1445.3 | -2022.9 | -1894.5 |
| 1470 | 1.2 | 1.8 | -930.4 | -1251.2 | -930.4 | -1507.9 | -1379.6 | -1507.9 | -1251.2 | -1379.6 | -1251.2 | -1636.3 | -930.4 | -1507.9 | -1379.6 |

In the axial force ratios in Table 2 and the total weight differences of the front side member 11 and the crash box 21 in Table 3, the fields filled in gray show the combinations of plate thicknesses and tensile strengths in which the axial force ratios were equal to or less than the critical ratio of axial force ($\leq 0.69$) illustrated in FIG. 6.

From the results shown in Tables 2 and 3, it was shown that when the plate thickness of the front side member 11 is the front side member inner 11a (inner) 1.0 mm and the front side member outer 11b (outer) 1.6 mm, and the tensile strength thereof is 1470 MPa class, and the plate thickness of the crash box 21 is 1.2 mm and the tensile strength thereof is 1470 MPa class, an absolute value of the total weight difference between the front side member 11 and the crash box 21 is the largest, that is, -2151.2 g, which is the optimal among the combinations of plate thicknesses and tensile strengths shown in Tables 2 and 3.

The combination of plate thicknesses and tensile strengths that maximizes the collision energy absorption amount (crash box EA amount) by the crash box 21 is a combination that maximizes the axial force $F_{x1}$ calculated for the crash box 21, among the combinations having axial force ratios equal to or less than the critical ratio of axial force ($\leq 0.69$) in the fields filled in gray in Table 2. In the present example, it can be determined that the plate thickness of the front side member 11 is the front side member inner 11a (inner) 1.2 mm and the front side member outer 11b (outer) 1.8 mm, and the tensile strength thereof is 1470 MPa class, and the plate thickness of the crash box 21 is 1.4 mm and the tensile strength thereof is 1470 MPa class.

According to the present invention, it was shown that the front side member can be deformed after the crash box is sufficiently compressively deformed, the intrusion amount of the vehicle body component into the passenger compartment side can be suppressed to a predetermined level or less, and the collision energy absorption amount can be secured at the time of the front crash of the vehicle. Furthermore, it was demonstrated that the weight of the vehicle body can be reduced without deteriorating the collision performance (collision energy absorption amount and intrusion amount of the vehicle body component into the passenger compartment).

Industrial Applicability

According to the present invention, it is possible to provide a vehicle body structure that can achieve compactness while satisfying predetermined collision performance at the time of front crash of a vehicle, a method for designing the vehicle body structure, and a method for manufacturing the vehicle body structure.

Reference Signs List

1 VEHICLE BODY STRUCTURE
11 FRONT SIDE MEMBER
11a FRONT SIDE MEMBER INNER
11b FRONT SIDE MEMBER OUTER
13 BEAD THAT CAUSES DEFORMATION
21 CRASH BOX
21a CRASH BOX INNER
21b CRASH BOX OUTER
23 BEAD
31 DASH LOWER PANEL
31a INTRUSION AMOUNT EVALUATION PART
33 BUMPER BEAM
101 VEHICLE MODEL
103 COLLISION OBJECT

**Claims**

1. A vehicle body structure comprising: a pair of left and right front side members extending in a vehicle front-rear direction and having a closed cross section structure; and a crash box extending from a distal end of each of the front side members toward a vehicle front side and having a closed cross section structure, wherein
a plate thickness and a tensile strength of a metal plate used for each of the front side member and the crash box are set such that a ratio $F_{x1}/F_{x2}$ between an axial force $F_{x1}$ of a cross section where a line length in a cross-sectional direction is the minimum of the closed cross section structure in the crash box, and an axial force $F_{x2}$ of a cross section where a line length in a cross-sectional direction is the minimum of the closed cross section structure in the front side member, is equal to or less than a predetermined critical ratio of axial force, thereby ensuring that the front side member is deformed after the crash box is sufficiently compressively deformed at the time of front crash of a vehicle.

2. A method for designing a vehicle body structure including a pair of left and right front side members extending in a vehicle front-rear direction and having a closed cross section structure, and a crash box extending from a distal end of each of the front side members toward a vehicle front side and having a closed cross section structure, the method being for designing the vehicle body structure such that the front side member is deformed after the crash box is sufficiently compressively deformed at the time of front crash of a vehicle, the method comprising:

> a vehicle model acquisition step of acquiring a vehicle model having the vehicle body structure, and setting an intrusion amount evaluation part for evaluating an intrusion amount of a vehicle body component into a passenger compartment side at the time of front crash of the vehicle model;
> a cross-section having minimum line length in cross-sectional direction determination step of determining a cross-section where a line length in a cross-sectional direction is the minimum having the minimum line length in the cross-sectional direction for each of the crash box and the front side member in the acquired vehicle model;
> an axial force ratio calculation step of calculating, for each of the crash box and the front side member in the vehicle model, axial forces in the cross-section where the line length in the cross-sectional direction is the minimum when various plate thicknesses and tensile strengths are set, and calculating ratios between the axial forces calculated for the crash box and the axial forces calculated for the front side member;
> a vehicle body component passenger compartment side intrusion amount calculation step of performing a crashworthiness analysis regarding the front crash of the vehicle model in which the various plate thicknesses and tensile strengths are set, and calculating the intrusion amounts of the vehicle body component into the passenger compartment side at the intrusion amount evaluation part set in the vehicle model at the time of the front crash of the vehicle model;
> a critical ratio of axial force determination step of determining a critical ratio of axial force at which the intrusion amounts saturate to a substantially constant value from a relationship between the axial force ratios calculated by setting the various plate thicknesses and tensile strengths in the axial force ratio calculation step, and the intrusion amounts of the vehicle body component into the passenger compartment side at the intrusion amount evaluation part calculated by the crashworthiness analysis of the vehicle model in which the various plate thicknesses and tensile strengths are set in the vehicle body component passenger compartment side intrusion amount calculation step; and
> a plate thickness and tensile strength determination step of determining a combination of plate thicknesses and tensile strengths in which the axial force ratio is equal to or less than the critical ratio of axial force determined in the critical ratio of axial force determination step among the axial force ratios calculated for various combinations of plate thicknesses and tensile strengths.

3. The method for designing a vehicle body structure according to claim 2, wherein

> in the axial force ratio calculation step, weights of the crash box and the front side member in the various combinations of plate thicknesses and tensile strengths are calculated, and
> in the plate thickness and tensile strength determination step, a combination of plate thicknesses and tensile strengths that minimizes a total weight of the crash box and the front side member calculated in the axial force ratio calculation step is determined among combinations of plate thicknesses and tensile strengths that achieve the axial force ratios equal to or less than the critical ratio of axial force.

4. The method for designing a vehicle body structure according to claim 2, wherein in the plate thickness and tensile strength determination step, a combination of plate thicknesses and tensile strengths that maximizes the axial force calculated for the crash box is determined among combinations of plate thicknesses and tensile strengths that achieve the axial force ratios equal to or less than the critical ratio of axial force.

5. A method for manufacturing a vehicle body structure, comprising:

> determining, by the method for designing a vehicle body structure according to any one of claims 2 to 4, a combination of plate thicknesses and tensile strengths for the front side member and the crash box of the vehicle body structure; and
> manufacturing the vehicle body structure including the front side member and the crash box such that a ratio $F_{x1}/F_{x2}$ between an axial force $F_{x1}$ of a cross section where a line length in a cross-sectional direction is the minimum of the closed cross section structure in the crash box, and an axial force $F_{x2}$ of a cross section where a

EP 4 745 010 A1

line length in a cross-sectional direction is the minimum of the closed cross section structure in the front side member, is equal to or less than the critical ratio of axial force, by using metal plates of the determined combination of plate thicknesses and tensile strengths.

# FIG.1

# FIG.2

## FIG.3

LOAD

F'

F

CRASH BOX IS INCREASED
IN STRENGTH

CONVENTIONAL VEHICLE
BODY STRUCTURE

BEADS THAT CAUSE
DEFORMATION ARE PROVIDED
TO FRONT SIDE MEMBER

$X_B$   $X_A$   $X_{A'}$   DEFORMATION
AMOUNT

## FIG.4

LOAD

F4

F3
F1'
F1

d1   d3'   d2   d4'   d3   d4   DEFORMATION
AMOUNT

## FIG.5

## FIG.6

# FIG.7

(a)

(b) B-B CROSS SECTION

(c) A-A CROSS SECTION

# FIG.8

```
                    ┌─────────┐
                    │  START  │
                    └─────────┘
                         │
                         ▼
    ┌───────────────────────────────────────────┐
    │      VEHICLE MODEL ACQUISITION STEP        │──── S1
    └───────────────────────────────────────────┘
                         │
                         ▼
    ┌───────────────────────────────────────────┐
    │  CROSS-SECTION HAVING MINIMUM LINE LENGTH IN│──── S3
    │ CROSS-SECTIONAL DIRECTION DETERMINATION STEP│
    └───────────────────────────────────────────┘
                         │
                         ▼
    ┌───────────────────────────────────────────┐
    │      AXIAL FORCE RATIO CALCULATION STEP    │──── S5
    └───────────────────────────────────────────┘
                         │
                         ▼
    ┌───────────────────────────────────────────┐
    │VEHICLE BODY COMPONENT PASSENGER COMPARTMENT │──── S7
    │   SIDE INTRUSION AMOUNT CALCULATION STEP    │
    └───────────────────────────────────────────┘
                         │
                         ▼
    ┌───────────────────────────────────────────┐
    │         CRITICAL RATIO OF AXIAL FORCE       │──── S9
    │           DETERMINATION STEP                │
    └───────────────────────────────────────────┘
                         │
                         ▼
    ┌───────────────────────────────────────────┐
    │     PLATE THICKNESS AND TENSILE STRENGTH    │──── S11
    │           DETERMINATION STEP                │
    └───────────────────────────────────────────┘
                         │
                         ▼
                    ┌─────────┐
                    │   END   │
                    └─────────┘
```

# FIG.9

(a)

103

1

101

Z→X
Y

(b)

103

1

101

Z
Y→X

# FIG.10

31

31a

31a

200mm   200mm

200mm   200mm

Z
X→Y

# FIG.11

(a) INVENTION EXAMPLE (No. 3)

DASH INTRUSION AMOUNT 20.4 mm
FOOT BRAKE INTRUSION
AMOUNT 12.0 mm
START OF BUCKLING OF FRONT
SIDE MEMBER
DISTANCE: 647.5 mm

(b) COMPARATIVE EXAMPLE (No. 4)

DASH INTRUSION AMOUNT 38.9 mm
FOOT BRAKE INTRUSION
AMOUNT 23.7 mm
START OF BUCKLING OF FRONT
SIDE MEMBER
DISTANCE: 550.6 mm

# FIG.12

## INTERNATIONAL SEARCH REPORT

| International application No. |
| --- |
| **PCT/JP2024/020280** |

### A. CLASSIFICATION OF SUBJECT MATTER

*B62D 25/08*(2006.01)i; *B62D 21/15*(2006.01)i; *B62D 65/00*(2006.01)i; *G06F 30/15*(2020.01)i; *G06F 30/20*(2020.01)i; *G06F 111/10*(2020.01)n; *G06F 119/14*(2020.01)n
FI: B62D25/08 D; B62D21/15 C; B62D65/00 Z; G06F30/15; G06F30/20; G06F111:10; G06F119:14

According to International Patent Classification (IPC) or to both national classification and IPC

### B. FIELDS SEARCHED

Minimum documentation searched (classification system followed by classification symbols)

B62D25/08; B62D21/15; B62D65/00; G06F30/15; G06F30/20; G06F111/10; G06F119/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2007-283868 A (TOYOTA JIDOSHA KABUSHIKI KAISHA) 01 November 2007 (2007-11-01)<br>paragraph [0028], fig. 1 | 1-5 |
| A | JP 2010-42753 A (SUMITOMO METAL INDUSTRIES, LTD.) 25 February 2010 (2010-02-25)<br>fig. 6-7 | 1-5 |
| A | WO 2022/234791 A1 (NIPPON STEEL CORPORATION) 10 November 2022 (2022-11-10)<br>paragraph [0016] | 1-5 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 August 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/020280**

| Patent document cited in search report | | | Publication date (day/month/year) | Patent family member(s) | Publication date (day/month/year) |
|---|---|---|---|---|---|
| JP | 2007-283868 | A | 01 November 2007 | (Family: none) | |
| JP | 2010-42753 | A | 25 February 2010 | (Family: none) | |
| WO | 2022/234791 | A1 | 10 November 2022 | EP 4302895 A1 paragraph [0037] | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021066202 A